# EUROPÄISCHE PATENTSCHRIFT

(11) **EP 2 058 546 B1**
(45) Veröffentlichungstag und Bekanntmachung des Hinweises auf die Patenterteilung: **22.11.2017**
(21) Anmeldenummer: 08014417.3
(22) Anmeldetag: 13.08.2008
(51) Int. Cl.: F16D 69/02

(54) **Verfahren zur Herstellung von Reibscheiben aus faserverstärkten keramischen Werkstoffen**
Method for producing friction discs from fibre-reinforced ceramic materials
Procédé de fabrication de couches de frottement en matières actives céramiques renforcées par des fibres

(30) Priorität: 09.11.2007 DE 102007053498
(43) Veröffentlichungstag der Anmeldung: 13.05.2009
(73) Patentinhaber: Audi AG, 85045 Ingolstadt (DE)
(72) Erfinder: Kienzle, Andreas, 86753 Balgheim-Möttingen (DE); Krätschmer, Ingrid, 86485 Biberach (DE)
(74) Vertreter: Asch, Konrad

(56) Entgegenhaltungen:
- WO-A1-02/26659
- DE-A1- 4 438 456
- DE-A1- 10 060 566
- DE-A1- 10 066 044

## Beschreibung

Die Erfindung betrifft ein Verfahren zur Herstellung von Reibscheiben aus faserverstärkten keramischen Werkstoffen mit einem mehrschichtigen Aufbau, insbesondere solche mit einer einem festigkeitsoptimierten Tragkörper und mindestens einer bezüglich ihrer tribologischen Eigenschaften optimierten Reibschicht.

Verfahren zur Herstellung von mehrschichtigen Reibscheiben sind bekannt aus dem Stand der Technik. So ist in der Patentanmeldung DE 44 38 456 A1 ein Verfahren beschrieben, bei dem mindestens ein Reibkörper gebildet aus einem mit Fasern aus Kohlenstoff verstärkten porösen Kohlenstoff-Körper, dessen Poren zumindest teilweise mit Silicium und Siliciumcarbid gefüllt sind, verbunden wird mit einem Tragkörper, der in kostengünstiger Weise aus porösem Kohlenstoff oder zumindest teilweise aus Kohlenstoff-Fasern hergestellt werden kann. Tragkörper und Reibkörper werden getrennt voneinander mit flüssigem Silicium infiltriert, wobei dieses in die Poren eindiffundiert und zumindest mit einem Teil des Kohlenstoff zumindest teilweise zu Siliciumcarbid reagiert. Beide Teile werden dann aufeinandergelegt, gegebenenfalls mit einer Zwischenlage aus einem porösen pyrolysierbaren Material auf Cellulosebasis, und der Spalt wird mit flüssigem Silicium gefüllt, wobei sich eine Verbindungsschicht bildet, die im wesentlichen aus Silicium besteht. Ein weiterer hier beschriebener Weg ist, Tragkörper und Reibkörper in dem sogenannten CFC-Zustand zu belassen, also in der Form von mit Fasern aus Kohlenstoff verstärktem porösen Kohlenstoff, und diese dann aufeinandergelegt mit flüssigem Silicium zu infiltrieren, wobei sich die gewünschte Verbindungsschicht an der Berührungsfläche der Körper ausbildet.

Aus der Patentanmeldung DE 100 60 566 A1 ist ein Verfahren bekannt, bei dem zunächst mit Fasern aus Kohlenstoff verstärkte sogenannte Grünlinge hergestellt werden, nämlich Teile, die durch den Pyrolyseschritt erst zu porösen, mit Fasern aus Kohlenstoff verstärkten Kohlenstoff-Körpern umgewandelt werden; dieser Zustand wird gemeinhin als "CFK-Zustand" bezeichnet (mit Fasern aus Kohlenstoff verstärkter Kunststoff oder mit Fasern aus Kohlenstoff verstärktes gehärtetes Kunstharz). Diese Grünlinge für die Reibschicht und für den Tragkörper werden gemäß der ersten Alternative miteinander verklebt, und dann gemeinsam pyrolysiert und anschließend mit Silicium infiltriert ("siliciert").

In einer zweiten Alternative, die auch Gegenstand der Teilanmeldung DE 100 66 044 A1 ist, werden lediglich Grünlinge für die Reibschicht hergestellt, von denen einer in eine Form für den gewünschten Reibkörper eingelegt wird, die Form anschließend mit einem Material für den Tragkörper (Fasern aus Kohlenstoff und ein Bindemittel) befüllt wird, und darauf ein Grünling für die zweite Reibschicht aufgelegt und der Inhalt der befüllten Form dann gemeinsam durch Pressen verdichtet wird.

In einer dritten Alternative schließlich wird eine Form zunächst mit einem Material für eine Reibschicht (Fasern aus Kohlenstoff und ein Bindemittel), dann mit einem Material für den Tragkörper wie oben, und abschließend wiederum mit einem Material für die zweite Reibschicht befüllt, der Inhalt wird danach gemeinsam gepresst.

In diesen beiden Alternativen wird ebenfalls anschließend an das Pressen pyrolysiert und mit Silicium infiltriert. Gemeinsames Merkmal ist hier, dass die für die Reibschicht eingesetzten Fasern kürzer als die in dem Tragkörper sind.

In der Patentanmeldung WO 2002/026 659 A1 sind im Anspruch 1 Reib- oder Gleitkörper aus mindestens zwei mit Faserbündeln verstärkten Verbundwerkstoffen mit keramischer Matrix genannt, wobei ein erster Verbundwerkstoff als Reibschicht die Außenseite des Gleitkörpers bildet und ein zweiter Verbundwerkstoff als Tragkörper mit dem ersten flächig verbunden ist, wobei die mindestens zwei Verbundwerkstoffe verschiedene Anteile an Faserbündeln, nämlich ein Verstärkungsfaserbündelanteil und ein Matrixfaserbündelanteil, mit unterschiedlicher mittlerer. Faserbündellänge aufweisen. Der Massenanteil der eingebrachten Faserbündel beträgt gemäß Seite 18, Zeile 28, bis Seite 19, Zeile 3, bei der Mischung für den Trägerkörper insgesamt 50 % bis 99 % der Gesamtmasse der Mischung von Faserbündeln, mindestens einem carbonisierbaren Bindemittel und Füllern, und bei der Mischung für die Reibschicht insgesamt 35 % bis 90 % der Gesamtmasse der Mischung von Faserbündeln, mindestens einem carbonisierbaren Bindemittel und Füllern. Gemäß Seite 19, Zeile 29, bis Seite 22, Zeile 30, der Beschreibung werden danach die durch Mischvorgang erhaltene Mischung für den Trägerkörper und das durch einen auf die Herstellung der Mischung für die Reibschicht folgenden Granulierprozeß erhaltene Granulat zur Herstellung der Reibschicht verdichtet; in den durch Pressen oder Extrusion erhaltenen Formkörpern werden die Bindemittel sodann carbonisiert. Hiernach folgt eine mechanische Bearbeitung der erhaltenen Formteile, um ihnen die endgültige Geometrie von Tragkörper und Reibschichten zu geben. Spätestens im Anschluß an diesen Verfahrenschritt werden die verschiedenen Verbundwerkstoffe der Reib- oder Gleitkörper miteinander verbunden. Bereits beim Verpressen der Pressmasse des Tragkörpers und des Granulats für die Reibschicht kann eine stoffschlüssige Verbindung durch ein gemeinsames Verpressen hergestellt werden. Der hierbei entstehende Verbund durchläuft anschließend die üblichen Prozeßschritte der Herstellungsverfahren von CMC-Formkörpern (Ceramic Matrix Composite) nach dem Verpressen. Ebenso können Tragkörper und Reibschicht nach dem Aushärten der Bindemittel als CFK-Formkörper (mit Carbon-Fasern verstärkter Kunststoff, hier ein Duroplast) oder nach den Carbonisieren bzw. Graphitieren als CFC-Formkörper (mit Carbon-Fasern verstärkter Kohlenstoff "C") verbunden werden. Die Verbindung kann zum Beispiel durch Verkleben erfolgen, üblicherweise mit carbonisierbaren Klebern.

Werden CFC-Formkörper miteinander verbunden, so erfolgt anschließend ein zumindestens ein weiterer Carbonisierungsschritt, während beim Verbinden von CFK-Formkörpern die Carbonisierung des Klebers üblicherweise gemeinsam mit der Carbonisierung der Formteile erfolgt. Eine andere Verbindungsvariante besteht darin, daß die CFC-Formteile von Tragkörper und Reibschicht aufeinander gelegt werden oder zusammengehalten werden und dann bei einer abschließenden Silicierung die SiC- Bildung in der Matrix zu einer schlüssigen Verbindung führt, wobei hierdurch die Werkstoffe von Tragkörper und Reibschicht ineinander übergehen können. Die beschriebenen Herstellungsverfahren von Reib- oder Gleitkörpern aus Verbundwerkstoffen, deren Matrix auch Silicium und/oder Silicide enthält, wie z.B. C/SiC-Verbundwerkstoffe, umfassen nach dem Verbinden von Trägerkörper und Reibschicht einen abschließenden Verfahrensschritt, in dem eine Silicierung vorgenommen wird. Eine Herstellung der Reibschicht über einen Siliciumcarbid enthaltenden Schlicker ist nicht offenbart.

Das in der Patentanmeldung DE 100 60 566 genannte Problem, daß sowohl bei einer Ausführung der Reibschicht mit längeren Fasern (mit einer Länge wie die im Tragkörper) als auch bei einer Ausführung der Reibschicht ganz ohne Fasern stets großflächige Ausbrüche in der Reibschicht auftreten, soll durch die beschriebenen Maßnahmen gelöst werden.

Bei den Untersuchungen, die der vorliegenden Erfindung zugrundelagen, wurde jedoch gefunden, daß die üblichen faserhaltigen Reibschichten mit einem Massenanteil von Fasern oder Faserbündeln von bis zu 70 % bei Beanspruchung durch Bremsvorgänge Fehlstellen durch Ausbrennungen in den Bereichen bilden, in denen Fasern oder Faserbündel nahe der Oberfläche der Reibschichten anzutreffen sind. Diese Fehlstellen und Unebenheiten der Oberfläche der Reibschichten führen zu einem erhöhten Verschleiß der Bremsbeläge, der nicht akzeptabel ist. Wird hingegen der Massenanteil an Fasern oder Faserbündeln vermindert, so ergibt sich in der durch Pyrolyse carbonisierten Reibschicht ein von großen Rissen durchzogenes Entspannungsgefüge, das zumindest vom Aussehen nicht akzeptiert wird.

Es besteht daher die Aufgabe, einen Reibkörper in Form eines Zylinderrings mit einer Reibschicht zu schaffen, die bei optimalen tribologischen Eigenschaften keine Ausbrennungen der Fasern bei Betrieb erleidet und die allenfalls feine Rißmuster aufweist.

Diese Aufgabe wurde gelöst durch das Verfahren gemäß Anspruch 1. Bevorzugte Ausführungsformen sind Gegenstand der Ansprüche 2 bis 6.

In einer ersten Ausführungsform wird dieser Schlicker durch Sprühen, Aufrakeln, Aufgießen, Aufstreichen oder Aufwalzen auf einen Grünling im CFK-Zustand für einen Tragkörper aufgebracht wird. Nach dem Trocknen bei 20 °C bis 60 °C ergibt sich eine festanhaftende flache Schicht, diese wird durch Erwärmen auf eine Temperatur von 120 °C bis 280 °C, je nach dem verwendeten Phenolharz, gehärtet.

Der Siliciumcarbid-Schlicker enthält einen Massenanteil von bevorzugt 50 % bis 70 %, besonders bevorzugt 55 % bis 65 %, an Siliciumcarbid-Pulver (bevorzugt in der alpha-Modifikation), bevorzugt mit einem mittleren Teilchendurchmesser von 50 µm bis 120 µm, besonders bevorzugt von 80 µm bis 100 µm, und einer Breite der Verteilung, bestimmt als Quotient des Massenmittels und des Zahlenmittels des Teilchendurchmessers, von bevorzugt 1,5 bis 3,0, besonders bevorzugt von 1,8 bis 2,5.

Der Massenanteil an Phenolharz in dem Schlicker beträgt bevorzugt von 20 % bis 45 %, besonders bevorzugt 25 % bis 40 %. Dabei werden Phenolresolharze mit folgenden Parametern bevorzugt: Festkörper-Massenanteil von 60 % bis 80 %, Viskosität nach Höppler, gemessen bei 20 °C nach DIN 53015 der ISO 0371 von 500 mPa·s bis 1000 mPa·s und ein pH-Wert von ca. 7.

Der Massenanteil von Fasern oder Faserbündeln in dem Schlicker beträgt bevorzugt 0,1 % bis 10 %, besonders bevorzugt 0,2 % bis 5 %, und insbesondere 0,3 % bis 1 %. Die Fasern liegen bevorzugt in Form von flachen Bündeln aus parallelen oder im wesentlichen parallelen Einzelfasern vor, mit einer Länge gemessen in Faserrichtung von bevorzugt 1 mm bis 10 mm, besonders bevorzugt von 2 mm bis 6 mm, einer Breite gemessen senkrecht zur Faserrichtung von bevorzugt 0,1 mm bis 1 mm, besonders bevorzugt von 0,2 mm bis 0,5 mm, und einer Höhe (Dicke, gemessen senkrecht zur Faserrichtung und senkrecht zur Breite) von bevorzugt 20 µm bis 600 µm, besonders bevorzugt von 100 µm bis 450 µm, wobei die Höhe stets geringer ist als die Breite der flachen Bündel.

Die oben angegebenen Massenanteile für Siliciumcarbid, Phenolharz und Fasern bedeuten den Quotienten der Masse des betreffenden Stoffes und der Summe der Massen aller in dem Schlicker enthaltenden Feststoffe.

Der Schlicker wird bevorzugt hergestellt, indem SiC-Pulver bei Raumtemperatur (20 °C) in einer alkoholischen Lösung (bevorzugt C1- bis C4-Alkohole oder deren Mischungen oder deren Mischungen mit Wasser, Massenanteil des Phenolharzes in der Lösung bevorzugt 55 % bis 85 %, besonders bevorzugt 60 % bis 80 %) eines Phenolharzes aufgeschlämmt wird, gegebenenfalls die Carbonfasern hinzugegeben werden, und die Mischung durch Rühren bei Raumtemperatur (20 °C) homogenisiert wird.

In einer zweiten Ausführungsform können auch Vorkörper für die Reibschicht hergestellt werden, indem aus dem Schlicker eine Folie gegossen wird, aus der nach dem Trocknen zu einem lederartigen flachen Gebilde Ringscheiben gestanzt werden, und diese durch Erwärmen auf eine Temperatur von 120 °C bis 280 °C, je nach dem verwendeten Phenolharz, zu einer Ringscheibe im CFK-Zustand gehärtet werden. Die Stanzabfälle können in üblicher Weise wieder durch Zerkleinern und Dispergieren in Wasser aufbereitet und zum Gießen weiterer Folien verwendet werden.

In einer dritten Ausführungsform kann der Schlicker zu einem Vorkörper in Ringscheibenform nach dem aus der Keramik-Technologie bekannten Schlickergussverfahren verarbeitet werden. Dazu wird eine Form aus einem porösen, Wasser aufsaugenden Material wie Gips bereitgestellt, in die der Schlicker gefüllt wird. Nach der Abgabe der Dispergiermittel in die Form kann dieser ein trockener Vorkörper entnommen werden, der wie oben bei einer Temperatur von 120 °C bis 280 °C, je nach dem verwendeten Phenolharz, zu einer Ringscheibe im CFK-Zustand gehärtet werden kann.

In einer vierten Ausführungsform wird der vorentwässerte eingedickte Schlicker durch Erwärmen plastifiziert und mittels der üblichen Spritzguss-Technik zu einer Ringscheibe spritzgegossen, die in der Form oder in einem separaten Schritt durch Erwärmen auf eine Temperatur von 120 °C bis 280 °C, je nach dem verwendeten Phenolharz, zu einer Ringscheibe im CFK-Zustand gehärtet werden kann.

Diese gemäß den weiteren Ausführungsformen aus dem Schlicker separat hergestellten, später die Reibschicht bildenden Ringscheiben werden im CFK-Zustand auf den ebenfalls im CFK-Zustand vorliegenden Tragkörper aufgeklebt, wobei als Kleber bevorzugt ein in Wasser gelöstes Phenolresolharz eingesetzt wird, dem bevorzugt ein feinkörniges Siliciumcarbid-Pulver mit einem Teilchendurchmesser von bevorzugt 20 µm bis 80 µm in einem Massenanteil von bevorzugt 5 % bis 20 % zugesetzt wird.

Zur Herstellung von Reibscheiben werden die so erhaltenen CFK-Körper umfassend jeweils einen Trag- und zwei Reibkörper auf beiden Seiten der den Tragkörper bildenden Ringscheibe zuerst durch Erwärmen unter Ausschluss von oxydierenden Agenzien bei Temperaturen von ca. 750 °C bis 1300 °C, bevorzugt 900 °C bis 1200 °C, carbonisiert, und schließlich mit flüssigem Silicium bei einer Temperatur von bevorzugt ca. 1500 °C bis ca. 1850 °C unter vermindertem Druck (0,01 hPa bis 5 hPa) infiltriert, wobei zumindest ein Teil des bei der Carbonisierung gebildeten Kohlenstoffs mit zumindest einem Teil des eingebrachten Siliciums zu Siliciumcarbid reagiert.

Überraschenderweise ergibt sich durch die Kombination von aus dem beschriebenen Schlicker hergestellten Reibschicht-Vorläufern mit Tragkörper-Grünlingen im CFK-Zustand und den anschließend durchlaufenen oben beschriebenen Schritten nach der Silicierung eine Reibscheibe mit nur feinem Rissmuster und mit einer verbesserten Beständigkeit gegen Ausbrennen der Fasern. Ebenso hervorzuheben ist die erheblich verbesserte Thermoschockbeständigkeit, bestimmt durch visuelle Benotung der Oberfläche nach 10 Aufheiz- und Abkühlzyklen (Ofen, 800 °C; wässrige Salzlösung mit Kochsalz bzw. Salzmischungen bei 0 °C (KCl, 5 %, NaCl, 5 % und CaCl₂, 5 %, jeweils Massenanteile in der Lösung).

Die Erfindung wird durch die nachfolgenden Beispiele erläutert.

### Beispiel 1

Eine homogene Suspension wurde hergestellt aus 500 g Siliciumcarbid mit einer mittleren Teilchengröße von 60 µm, 300 g eines flüssigen Phenolresolharzes (®Norsophen 1203, Hexion Specialty Chemicals), 100 g Äthanol, 3 g Kohlenstoff-Faserbündeln mit einer Länge von 1 mm bis 5 mm und einer Breite von 0,1 mm bis 0,3 mm bei einer Dicke von ca. 0,1mm, durch Verrühren mit einem Blattrührer bei Raumtemperatur (20 °C). Die Suspension wurde mit einer Rakel auf einen Grünling für einen Tragkörper einer Bremsscheibe im CFK-Zustand in Form eines Zylinderrings (Außendurchmesser 425 mm, Innendurchmesser 164 mm) aufgetragen, wobei die aufgetragene Menge so gewählt wurde, dass sich nach dem Schritt des Carbonisierens eine Dicke von ca. 3 mm ergab. Die einseitig beschichtete Scheibe wurde zunächst bei 60 °C unter einem Luftstrom getrocknet, anschließend wurde nach dem Abkühlen die andere Deckfläche der Zylinderringscheibe in gleicher Weise beschichtet und getrocknet. Die nun beidseitig beschichtete Zylinderring-Scheibe wurde bei 180 °C ca. eine Stunde in einem Ofen belassen, um die phenolharzgebundene Schicht auszuhärten.

Die Scheibe wurde anschließend in einem Ofen unter Schutzgas (Stickstoff) mit einer Heizrate von 1 K/min auf 900 °C erhitzt, und bei dieser Temperatur eine Stunde belassen. Nach Abkühlen ergab sich eine fest anhaftende, durch den beim Carbonisieren aus dem Phenolharz gebildeten Kohlenstoff gebundene Siliciumcarbid-Schicht auf dem aus dem Tragkörper-CFK-Grünling durch das Carbonisieren gebildeten CFC-Körper.

Die Scheibe wurde auf die gewünschten Maße abgeschliffen, und dann bei 1700 °C unter vermindertem Druck von ca. 10 Pa mit flüssigem Silicium infiltriert. Dabei bildet sich aus einem Großteil des durch das Carbonisieren entstandenen Kohlenstoffs durch Reaktion mit dem Silicium Siliciumcarbid. Nach dem Abkühlen wurde die erhaltene Scheibe auf das Endmaß geschliffen. Die Oberfläche der Reibschicht zeigte ein fein verästeltes Rissmuster ohne Ausbrüche und Inhomogenitäten.

### Beispiel 2

Ein Schlicker wurde gemäß Beispiel 1 hergestellt und mehrfach jeweils in einem Vorratsbehälter unter vermindertem Druck aufgerührt, und anschließend von oben ohne Rühren belüftet, bis die Mischung blasenfrei war.

Dieser entlüftete Schlicker wurde aus einem Gießtrichter mit Schlitz auf eine Kunststoff-Folie mit einer Bandgeschwindigkeit von 7 m/h aufgetragen, wobei die Schichthöhe auf 3,5 mm eingestellt wurde. Die Folie wurde in einem Durchlaufofen bei 30 °C vorgetrocknet und anschließend bei bis zu 80 °C von Lösungsmittel und Wasser weitgehend befreit. Man erhielt eine lederartige Folie, aus der Zylinderringscheiben gestanzt wurden. Der Stanzabfall wurde zerkleinert und in den Mischer zur Schlickerherstellung zurückgeführt. Die ausgestanzten Folienscheiben wurden auf Lochblechen in einem Ofen fertiggetrocknet und bei 180 °C zu CFK-Scheiben gehärtet.

Die so hergestellten CFK-Scheiben wurden mit Hilfe eines Klebers (Massenanteil von 80 % eines wässrigen Phenolresolharzes "®Norsophen 1203" der Fa. Hexion Specialty Chemicals und 20 % Carbonfasern mit einem Durchmesser von 6 µm bis 12 µm und einer Länge von 0,5 mm bis 1 mm) auf einen Grünling für den Tragkörper einer Bremsscheibe im CFK-Zustand (Maße wie im Beispiel 1) aufgeklebt. Dabei wurde der Kleber in einer Schichtdicke von ca. 0,5 mm auf beide Deckflächen des Tragkörper-Grünlings aufgebracht, und die gehärteten Folienscheiben wurden aufgelegt. Der Verbund wurde anschließend in einer Warmfließpresse gehärtet (160 °C, 2,2 MPa, 30 Minuten).

Nach der Entnahme aus der Presse wurde der Verbundkörper abgeschliffen, anschließend in einem Ofen unter Schutzgas (Stickstoff) mit einer Heizrate von 1 K/min auf 900 °C erhitzt, und bei dieser Temperatur eine Stunde belassen. Nach Abkühlen wurde die Verbundscheibe wurde auf die gewünschten Maße abgeschliffen, und dann bei 1700 °C unter vermindertem Druck von ca. 10 Pa mit flüssigem Silicium infiltriert. Dabei bildet sich aus einem Großteil des durch das Carbonisieren entstandenen Kohlenstoffs durch Reaktion mit dem Silicium Siliciumcarbid. Nach dem Abkühlen wurde die erhaltene zylinderringförmige Scheibe auf das Endmaß geschliffen. Die Oberfläche der Reibschicht zeigte ein fein verästeltes Rissmuster ohne Ausbrüche und Inhomogenitäten.

### Beispiel 3

Ein Schlicker gemäß Beispiel 1 wurde durch Zugabe von 200 g entionisiertem Wasser verdünnt und homogenisiert, und in eine Gipsform in Form eines Zylinderrings mit einem Innendurchmesser von 164 mm, einem Außendurchmesser von 425 mm und einer Höhe von 4 mm eingegossen. Nachdem das Lösungsmittel und das Wasser zum größten Teil von dem Gipskörper aufgesogen worden waren, wurde die trockene Scheibe entnommen und auf einem Lochblech in einem Ofen zunächst bei 90 °C in einem Stickstoffstrom fertiggetrocknet und anschließend bei 180 °C zum CFK-Zustand gehärtet.

Zwei solcher Reibschicht-Vorkörper wurden wie im Beispiel 2 auf einen Tragkörper für eine Reibscheibe ebenfalls im CFK-Zustand aufgeklebt und verpresst.

Nach der Entnahme aus der Presse wurde der Verbundkörper abgeschliffen, anschließend in einem Ofen unter Schutzgas (Stickstoff) mit einer Heizrate von 1 K/min auf 900 °C erhitzt, und bei dieser Temperatur eine Stunde belassen. Nach Abkühlen wurde die Verbundscheibe wurde auf die gewünschten Maße abgeschliffen, und dann bei 1700 °C unter vermindertem Druck von ca. 10 Pa mit flüssigem Silicium infiltriert. Dabei bildet sich aus einem Großteil des durch das Carbonisieren entstandenen Kohlenstoffs durch Reaktion mit dem Silicium Siliciumcarbid. Nach dem Abkühlen wurde die erhaltene zylinderringförmige Scheibe auf das Endmaß geschliffen. Die Oberfläche der Reibschicht zeigte ein fein verästeltes Rissmuster ohne Ausbrüche und Inhomogenitäten.

### Beispiel 4

Ein Schlicker wurde wie im Beispiel 1 hergestellt und durch Abziehen des Lösungsmittels bei 60 °C unter vermindertem Druck in einem Rotationsverdampfer zur Trockene eingedickt. Die zurückgebliebene Masse wurde zerkleinert und in einer Spritzgussmaschine aufgeschmolzen und zu Zylinderringen mit einer Dicke von 2,5 mm, einem Außendurchmensser von 425 mm und einem Innendurchmesser von 164 mm geformt. Die Gusskörper wurden in der Form auf 180 °C erwärmt und gehärtet, so dass sie sich ohne Verformung entformen ließen.

Zwei solcher Reibschicht-Vorkörper wurden wie im Beispiel 2 auf einen Tragkörper für eine Reibscheibe ebenfalls im CFK-Zustand aufgeklebt und verpresst.

Nach der Entnahme aus der Presse wurde der Verbundkörper abgeschliffen, anschließend in einem Ofen unter Schutzgas (Stickstoff) mit einer Heizrate von 1K/min auf 900 °C erhitzt, und bei dieser Temperatur eine Stunde belassen. Nach Abkühlen wurde die Verbundscheibe wurde auf die gewünschten Maße abgeschliffen, und dann bei 1700 °C unter vermindertem Druck von 10 Pa mit flüssigem Silicium infiltriert. Dabei bildet sich aus einem Großteil des durch das Carbonisieren entstandenen Kohlenstoffs durch Reaktion mit dem Silicium Siliciumcarbid. Nach dem Abkühlen wurde die erhaltene zylinderringförmige Scheibe auf das Endmaß geschliffen. Die Oberfläche der Reibschicht zeigte ein fein verästeltes Rissmuster ohne Ausbrüche und Inhomogenitäten.

### Beispiele 5 bis 8 (Vergleich)

Die Beispiele 1 bis 4 wurden wiederholt, jedoch ohne Zugabe von Carbonfasern in den Schlicker. Die Verarbeitungsschritte waren dieselben. Es wurde auch in diesen Fällen der faserhaltige Kleber eingesetzt. Nach dem Silicieren und Abschleifen der Oberfläche wie in den Beispielen 1 bis 4 ergab sich ein grobes Rissmuster an der zugänglichen Oberfläche, wobei auch mit dem unbewaffneten Auge tiefe Risse feststellbar waren.

### Beispiel 9 (Vergleich)

Es wurden Folienscheiben gemäß Beispiel 2 hergestellt und gehärtet. Die gehärteten Folienscheiben wurden anschließend auf einem Lochblech in einem Ofen unter Schutzgas (Stickstoff) mit einer Heizrate von 1K/min auf 900 °C erhitzt, und bei dieser Temperatur eine Stunde belassen. Nach Abkühlen wurden die Folienscheiben oberflächlich angeschliffen und auf einen ebenfalls (unter denselben Bedingungen) zum CFC-Zustand carbonisierten Tragkörper mittels eines Klebers (Massenanteil von 80 % eines wässrigen Phenolresolharzes "®Norsophen 1203" der Fa. Hexion Specialty Chemicals und 20 % Carbonfasern mit einem Durchmesser von 6 µm bis 12 µm und einer Länge von 0,5 mm bis 1 mm) aufgeklebt. Dabei wurde der Kleber in einer Schichtdicke von ca. 0,5 mm auf beide Deckflächen des carbonisierten Tragkörper-Grünlings aufgebracht, und die carbonisierten Folienscheiben wurden aufgelegt. Der Verbund wurde anschließend in einer Warmfließpresse gehärtet (160 °C, 2,2 MPa, 30 Minuten).

Nach Abkühlen wurde der Verbund auf die gewünschten Maße abgeschliffen, und dann bei 1700 °C) unter vermindertem Druck von ca. 10 Pa mit flüssigem Silicium infiltriert.

Dabei bildet sich aus einem Großteil des durch das Carbonisieren entstandenen Kohlenstoffs durch Reaktion mit dem Silicium Siliciumcarbid. Nach dem Abkühlen wurde die erhaltene zylinderringförmige Scheibe auf das Endmaß geschliffen. Die Oberfläche der Reibschicht zeigte ein grobes Rissmuster mit Ausbrüchen.

Die nachfolgende Tabelle fasst die visuelle Beurteilung der Oberfläche der Reibschicht und die Beständigkeit im Thermoschocktest nach jeweils 10 Zyklen zusammen. Dabei ist "1" der beste und "6" der schlechteste Wert, dies entspricht bei der Oberflächenbeurteilung einer Spanne von : "nur feine Risse, keine oberflächlichen Kerben, keine Ausbrüche" bis "viele grobe Risse und Ausbrüche mit einer Tiefe von mehr als 0,5 mm", und bei der Thermoschockbeständigkeit einer Spanne von "keine sichtbare Oberflächenschädigung" bis "viele Ausbrüche und Abplatzungen, über 30 % der Oberfläche sind beschädigt".

**Tabelle 1: Ergebnisse der Beurteilung der Beispiele**

| Beispiel | Oberfläche der Reibschicht | Thermoschock-Verhalten |
|---|---|---|
| 1 | 2 | 2 |
| 2 | 2 | 2 |
| 3 | 1 | 1 |
| 4 | 2 | 2 |
| 5 | 5 | 5 |
| 6 | 6 | 5 |
| 7 | 5 | 6 |
| 8 | 5 | 5 |
| 9 | 4 | 5 |

Wie aus der Beurteilung der Beispiele zu ersehen ist, ist ein Fasergehalt im angegebenen Bereich günstig sowohl für die Freiheit von Rissen in der Reibschicht, als auch für das Thermoschockverhalten. Erhöht man den Fasergehalt im Feststoff des Schlickers zur Herstellung der Reibschicht auf Massenanteile von über 10 %, so wird in zunehmendem Maße beobachtet, dass sich Ausbrennungen in der Reibschicht bilden; die Auswirkung des höheren Fasergehalts wird vor allem bei der Beurteilung des ThermoschockVerhaltens deutlich, wo bei über 10 % Massenanteil an Carbonfasern in der Reibschicht schon vor 5 Zyklen über 30 % der Reibfläche durch Ausbrüche und Abplatzungen beschädigt sind. Bei einem Massenanteil von über 5 % bis zu 10 % an Fasern im Schlicker werden 10 Zyklen noch überstanden, ohne dass die Reibschicht sich flächig ablöst, wobei jedoch in zunehmendem Maß mit der Erhöhung des Faser-Massenanteils Abplatzungen der Reibschicht zu beobachten sind. Als besonders günstig haben sich in den Versuchen im Thermoschocktest Massenanteile der Carbonfasern im Feststoff des Schlickers für die Reibschicht von 0,1 % bis 3,0 %, insbesondere 0,2 % bis 2 %, und speziell 0,3 % bis 1 % erwiesen. Die Rissstruktur der Oberfläche ist im gesamten beanspruchten Bereich von 0,1 % bis 10 % fein verästelt, erst bei Werten unterhalb und oberhalb dieser Grenzen ergibt sich eine grobe Rissstruktur mit tiefen Rissen.

## Patentansprüche

1. Verfahren zur Herstellung von Reibscheiben umfassend einen Tragkörper und mindestens eine Reibschicht, **dadurch gekennzeichnet, dass** die mindestens eine Reibschicht hergestellt wird aus einem Siliciumcarbid-Schlicker, der zusätzlich Phenolharze in einem Lösungsmittel gelöst und einen Massenanteil im Feststoff des Schlickers von 0,1 % bis 10 % von Fasern oder Faserbündeln aus Kohlenstoff enthält, wobei die aus diesem Schlicker hergestellte Reibschicht auf einen Tragkörper, der in Form eines Zylinderrings im CFK-Zustand vorliegt,
a) durch Sprühen, Aufrakeln, Aufgießen, Aufstreichen oder Aufwalzen des Schlickers auf den Tragkörper im CFK-Zustand aufgebracht wird, und die sich nach dem Trocknen bei 20 °C bis 60 °C ergebende festanhaftende flache Schicht durch Erwärmen auf eine Temperatur von 120 °C bis 280 °C gehärtet wird, oder
b) als aus dem Schlicker hergestellter Vorkörper, wobei aus dem Schlicker eine Folie gegossen wird, aus der nach Trocknen zu einem lederartigen flachen Gebilde Ringscheiben gestanzt werden, und diese durch Erwärmen auf eine Temperatur von 120 °C bis 280 °C zu einer Ringscheibe im CFK-Zustand gehärtet werden, oder
c) als aus dem Schlicker nach dem Schlickergussverfahren hergestellter Vorkörper in Ringscheibenform, wobei eine Form aus einem porösen, Wasser aufsaugenden Material bereitgestellt wird, in die der Schlicker gefüllt wird, und wobei nach der Abgabe der Dispergiermittel in die Form aus dieser ein trockener Vorkörper entnommen wird, der bei einer Temperatur von 120 °C bis 280 °C zu einer Ringscheibe im CFK-Zustand gehärtet wird, oder
d) als aus dem Schlicker nach Vorentwässern, Eindicken und Plastifizieren spritzgegossene Ringscheibe, wobei
- der Schlicker zunächst vorentwässert und dadurch eingedickt wird, anschließend
- der vorentwässerte eingedickte Schlicker durch Erwärmen plastifiziert und
- zu einer Ringscheibe spritzgegossen wird,
die in einem separaten Schritt durch Erwärmen auf eine Temperatur von 120 °C bis 280 °C zu einer Ringscheibe im CFK-Zustand gehärtet wird
aufgebracht und gemeinsam mit dem Tragkörper anschließend carbonisiert und siliciert wird.

2. Verfahren nach Anspruch 1, **dadurch gekennzeichnet, dass** der Siliciumcarbid-Schlicker einen Massenanteil von 50 % bis 70 % an Siliciumcarbid-Pulver, einen Massenanteil an Phenolharz von 20 % bis 45 %, und einen Massenanteil von Fasern oder Faserbündeln von 0,1 % bis 10 % enthält, wobei die Massenanteile jeweils auf die Masse des Feststoffs in dem Schlicker bezogen sind.

3. Verfahren nach Anspruch 1, **dadurch gekennzeichnet, daß** die Fasern in Form von flachen Bündeln aus parallelen oder im wesentlichen parallelen Einzelfasern vorliegen, mit einer Länge gemessen in Faserrichtung von 1 mm bis 10 mm, einer Breite gemessen senkrecht zur Faserrichtung von 0,1 mm bis 1 mm, und einer Höhe, gemessen senkrecht zur Faserrichtung und senkrecht zur Breite, von 20 µm bis 600 µm, wobei die Höhe stets geringer ist als die Breite der flachen Bündel.

4. Verfahren nach Anspruch 1, **dadurch gekennzeichnet, daß** der Schlicker hergestellt wird, indem SiC-Pulver bei Raumtemperatur in einer alkoholischen Lösung eines Phenolharzes mit einem Massenanteil des Phenolharzes in der Lösung von 55 % bis 85 % aufgeschlämmt wird, die Carbonfasern hinzugegeben werden, und die Mischung durch Rühren bei Raumtemperatur homogenisiert wird.

5. Verfahren nach einem oder mehreren der Ansprüche 1 bis 4, **dadurch gekennzeichnet, dass** die die Reibschicht bildenden Ringscheiben im CFK-Zustand gemäß den Ausführungsformen b), c) und d) des Anspruchs 1 auf den ebenfalls im CFK-Zustand vorliegenden Tragkörper aufgeklebt werden, wobei als Kleber ein in Wasser gelöstes Phenolresolharz eingesetzt wird, dem ein feinkörniges Siliciumcarbid-Pulver mit einem Teilchendurchmesser von 20 µm bis 80 µm in einem Massenanteil von 5 % bis 20 % zugesetzt wird.

6. Verfahren zur Herstellung von Reibscheiben, bei dem die gemäß einem oder mehreren der Ansprüche 1 bis 5 erhaltenen CFK-Körper umfassend jeweils einen Trag- und zwei Reibkörper auf beiden Seiten der den Tragkörper bildenden Ringscheibe zuerst durch Erwärmen unter Ausschluß von oxydierenden Agenzien bei Temperaturen von ca. 750 °C bis 1300 °C carbonisiert, und schließlich mit flüssigem Silicium bei einer Temperatur von bevorzugt ca. 1500 °C bis ca. 1850 °C unter vermindertem Druck infiltriert werden, wobei zumindest ein Teil des bei der Carbonisierung gebildeten Kohlenstoffs mit zumindest einem Teil des eingebrachten Siliciums zu Siliciumcarbid reagiert.

## Claims

1. Method for producing friction disks, comprising a supporting body and at least one friction layer, **characterised in that** the at least one friction layer is produced from a silicon carbide slurry which additionally contains phenolic resin dissolved in a solvent and a mass proportion in the solid material of the slurry from 0.1% to 10% of fibres or fibre bundles made from carbon, wherein the friction layer produced from this slurry is attached to a supporting body, which is present in the form of a cylinder ring in the CFRP state,
a) is attached to the supporting body in the CFRP state by spraying, scraping, pouring, spreading or rolling of the slurry, and the firmly-adhering, flat layer resulting after the drying at 20°C to 60°C is cured by heating to a temperature from 120°C to 280°C, or
b) as a preform produced from the slurry, wherein a film is poured from the slurry from which friction disks are stamped after drying to a leather-like flat structure, and these are cured into a friction disk in the CFRP state by heating to a temperature from 120°C to 280°C, or
c) as a preform in friction disk-form produced from the slurry according to the slurry casting method, wherein a mould made from a porous, water-absorbing material is provided into which the slurry is filled, and wherein after the delivery of the dispersing agent in the mould, a dry preform is extracted from this, which is cured into a friction disk in the CFRP state at a temperature from 120°C to 280°C, or
d) as a friction disk which is injection moulded from the slurry after pre-draining, thickening and plasticising, wherein
- the slurry is firstly pre-drained and thereby thickened, then
- the pre-drained, thickened slurry is plasticised by heating and
- injection-moulded into a friction disk,
which is cured into a friction disk in the CFRP state in a separate step by heating to a temperature from 120°C to 280°C,
and is then carbonised and siliconized together with the supporting body.

2. Method according to claim 1, **characterised in that** the silicon carbide slurry contains a mass proportion from 50% to 70% of silicon carbide powder, a mass proportion of phenolic resin from 20% to 45%, and a mass proportion of fibres or fibre bundles from 0.1% to 10%, wherein the mass proportions are related to the mass of the solid material in the slurry respectively.

3. Method according to claim 1, **characterised in that** the fibres are present in the form of flat bundles made from parallel or substantially parallel individual fibres, having a length measured in the fibre direction from 1mm to 10mm, a width measured perpendicularly to the fibre direction from 0.1mm to 1mm, and a height measured perpendicularly to the fibre direction and perpendicularly to the width from 20µm to 600µm, wherein the height is always lower than the width of the flat bundle.

4. Method according to claim 1, **characterised in that** the slurry is produced by SiC powder being suspended at room temperature in an alcoholic solution of a phenolic resin having a mass proportion of the phenolic resin in the solution from 55% to 85%, the carbon fibres being added and the mixture being homogenised by stirring at room temperature.

5. Method according to one or more of claims 1 to 4, **characterised in that** the friction disks forming the friction layer in the CFRP state are glued to the supporting body likewise present in the CFRP state according to the embodiments b), c) and d) of claim 1, wherein a phenol resol resin dissolved in water is used as a glue to which is added a fine-grained silicon carbide powder having a particle diameter from 20µm to 80µm in a mass proportion from 5% to 20%.

6. Method for producing friction disks in which the CFRP body obtained according to one or more of claims 1 to 5 comprising one supporting and two friction bodies on both sides of the friction disk forming the supporting body respectively are firstly carbonised by heating to the exclusion of oxidising agents at temperatures from approx. 750°C to 1300°C, and then infiltrated with liquid silicon at a temperature from preferably approx. 1500°C to approx. 1850°C at reduced pressure, wherein at least one part of the carbon formed during the carbonising reacts with at least one part of the introduced silicon to form silicon carbide.

## Revendications

1. Procédé de fabrication de disques de friction comprenant un corps de support et au moins une couche de friction, **caractérisé en ce que** la au moins une couche de friction est fabriquée à partir d'une suspension de carbure de silicium, qui contient en outre des résines phénoliques dissoutes dans un solvant et une fraction massique dans les solides de la suspension de 0,1 % à 10 % de fibres ou de faisceau de fibres de carbone, dans lequel la couche de friction formée de cette suspension est appliquée sur un corps de support, qui se présente sous la forme d'un anneau cylindrique à l'état de composite renforcé par des fibres CFPR,
a) par pulvérisation, par couchage, par coulée, par enduction ou par laminage de la suspension sur le corps de support à l'état de CFRP et la couche plate adhérant solidement qui se forme après séchage à 20 °C à 60 °C est durcie par chauffage à une température de 120 °C à 280 °C ou
b) comme ébauche fabriquée à partir de la suspension, dans lequel on coule à partir de la suspension une feuille dans laquelle on découpe, après séchage en un produit plat pareil à du cuir, des disques annulaires qui sont durcis par chauffage à une température de 120 °C à 280 °C en un disque annulaire à l'état CFRP, ou
c) comme ébauche fabriquée à partir de la suspension selon le procédé de coulée de la suspension sous la forme de disques annulaires, dans lequel on prépare un moule à partir d'un matériau poreux aspirant l'eau, que l'on remplit de la suspension et dans lequel, après la distribution de l'agent dispersant dans le moule, on en tire une ébauche séchée qui est durcie à une température de 120 °C à 280 °C pour obtenir un disque annulaire à l'état CFPR, ou
d) comme disque annulaire coulé par injection à partir de la suspension après essorage, épaississement et plastification, dans lequel :
- la suspension est d'abord essorée et épaissie de ce fait, puis
- la suspension essorée et épaissie est plastifiée par chauffage et
- est coulée par injection pour former un disque annulaire,
qui est durci dans une étape séparée par chauffage à une température de 120 °C à 280 °C pour obtenir un disque annulaire à l'état CFPR et
est ensuite carbonisé et silicié conjointement avec le corps de support.

2. Procédé selon la revendication 1, **caractérisé en ce que** la suspension de carbure de silicium contient une fraction massique de 50 % à 70 % de poudre de carbure de silicium, une fraction massique de résine phénolique de 20 à 45 % et une fraction massique de fibres ou de faisceaux de fibres de 0,1 % à 10 %, dans lequel les fractions massiques se réfèrent respectivement à la masse du produit solide dans la suspension.

3. Procédé selon la revendication 1, **caractérisé en ce que** les fibres se présentent sous la forme de faisceaux plats formés de fibres individuelles parallèles ou sensiblement parallèles d'une longueur mesurée dans la direction des fibres de 1 mm à 10 mm, d'une largeur mesurée perpendiculairement à la direction des fibres de 0,1 mm à 1 mm et d'une hauteur mesurée perpendiculairement à la direction des fibres et perpendiculairement à la largeur de 20 µm à 600 µm, dans lequel la hauteur est toujours plus faible que la largeur du faisceau plat.

4. Procédé selon la revendication 1, **caractérisé en ce que** la suspension est fabriquée en mettant en suspension de la poudre de SIC à température ambiante dans une solution alcoolique d'une résine phénolique avec une fraction massique de la résine phénolique dans la solution de 55 % à 85 %, en ajoutant les fibres de carbone et en homogénéisant le mélange par agitation à température ambiante.

5. Procédé selon une ou plusieurs des revendications 1 à 4, **caractérisé en ce que** les disques annulaires formant la couche de friction sont collés à l'état CFPR selon les formes de réalisation b), c) et d) de la revendication 1 sur le corps de support également présent à l'état CFK, dans lequel en utilise comme colle une résine de phénolrésol dissoute dans de l'eau, à laquelle on ajoute une poudre de carbure de silicium de fine granulométrie d'un diamètre particulaire de 20 µm à 80 µm dans une fraction massique de 5 % à 20 %.

6. Procédé de fabrication de disques de friction, dans lequel le corps CFPR obtenu selon une ou plusieurs des revendications 1 à 5 comprenant respectivement un corps de support et deux corps de friction sur les deux côtés du disque annulaire formant le corps de support est d'abord carbonisé par chauffage en l'absence d'agents oxydants à des températures d'environ 750 °C à 1300 °C et sont finalement infiltrés par du silicium liquide à une température de préférence d'environ 1500 °C à environ 1850 °C sous pression réduite, dans lequel au moins une partie du carbone formé lors de la carbonisation réagit avec au moins une partie du silicium introduit pour obtenir du carbure de silicium.
